(19) Europäisches Patentamt
European Patent Office
Office européen des brevets

(11) **EP 3 589 863 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **18708384.5**

(22) Anmeldetag: **27.02.2018**

(51) Int Cl.:
*F16H 3/72* *(2006.01)*    *H02P 6/04* *(2016.01)*
*H02P 5/747* *(2006.01)*

(86) Internationale Anmeldenummer:
**PCT/EP2018/054755**

(87) Internationale Veröffentlichungsnummer:
**WO 2018/158222 (07.09.2018 Gazette 2018/36)**

(54) **ÜBERLAGERUNGSGETRIEBE FÜR EINEN ANTRIEB**

SUPERIMPOSING GEARBOX FOR A DRIVE

TRANSMISSION À SUPERPOSITION POUR UN MÉCANISME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2017 DE 102017104467**

(43) Veröffentlichungstag der Anmeldung:
**08.01.2020 Patentblatt 2020/02**

(73) Patentinhaber: **Voith Patent GmbH**
**89522 Heidenheim (DE)**

(72) Erfinder:
• **LINDENMAIER, Jochen**
**89542 Herbrechtingen (DE)**
• **LAUTER, Bernd**
**89567 Sontheim an der Brenz (DE)**
• **SEEBERGER, Tobias**
**91550 Dinkelsbühl (DE)**

(74) Vertreter: **Voith Patent GmbH - Patentabteilung**
**St. Pöltener Straße 43**
**89522 Heidenheim (DE)**

(56) Entgegenhaltungen:
**EP-A1- 2 535 582**    **DE-A1-102014 210 870**
**DE-A1-102014 225 738**    **US-A1- 2009 010 094**
**US-A1- 2011 042 155**

EP 3 589 863 B1

## Beschreibung

Die Erfindung betrifft ein Antriebssystem mit einem Überlagerungsgetriebe, einem Hauptantrieb und einem Hilfsantrieb. Insbesondere betrifft die Erfindung ein Überlagerungsgetriebe, das in zwei verschiedenen Betriebszuständen betrieben werden kann, die zu einem unteren und einem oberen Drehzahlbereich korrespondieren.

Stand der Technik

Zum Antrieb mechanischer Systeme, z. B. einem Hubwerk, wird nach Stand der Technik eine Mehrmotorenanordnung verwendet, bei denen mehrere elektrische Antriebsmotoren über ein Überlagerungsgetriebe (Planetengetriebe) die Leistung teilweise übernehmen, d. h. die Drehzahlen der Motoren addieren sich, während die Drehmomente über das Sonnenrad oder das Hohlrad jeweils parallel zum Abtrieb laufen. Üblicherweise werden ein Hauptantrieb und einer oder mehrere Hilfsantriebe eingesetzt, wobei aus Sicherheitsgründen bevorzugt auch ein Betrieb ohne den Hauptantrieb möglich ist.

DE 10 2014 210 870 A1 betrifft ein Überlagerungsgetriebe auf der Basis eines Planetengetriebes, bei dem der Planetenradträger mittels einer Kupplung mit dem Sonnenrad gekoppelt werden kann. In einem unteren Drehzahlbereich ist die Kupplung geschlossen und der Antrieb erfolgt ausschließlich mittels eines Hilfsantriebs, der den Planetenradträger antreibt. Die Drehzahl des Hilfsantriebs kann dabei gesteuert werden. Der Hauptantrieb ist mit dem Sonnenrad verbunden und wird über die geschlossene Kupplung mitgedreht. Eine Arbeitsmaschine kann mit dem Sonnenrad gekoppelt werden. In einem höheren Drehzahlbereich wird der Hauptantrieb eingeschaltet und die Kupplung geöffnet. Durch den Summeneffekt kann dann die Drehzahl der Arbeitsmaschine durch Steuern der Drehzahl der Hilfsmaschine gesteuert werden. Insgesamt kann die Drehzahl der Abtriebswelle in einem Bereich von 0 bis 100% einer Maximaldrehzahl gesteuert werden.

Insbesondere beim Übergang zwischen dem unteren und dem oberen Drehzahlbereich kann es zu Spitzenbelastungen kommen. Um die durchgängige Steuerbarkeit des Überlagerungsgetriebes zu gewährleisten, müssen alle seine Elemente ausreichend dimensioniert sein, was zu einem großen, schweren und teuren Antriebssystem führen kann.

Eine der Erfindung zu Grunde liegende Aufgabe besteht darin, eine Technik anzugeben, die es erlaubt, ein Antriebssystem auf der Basis mehrerer, mittels eines Überlagerungsgetriebes koppelbarer Antriebe kleiner, leichter oder kostengünstiger bereitzustellen. Die Erfindung löst diese Aufgabe mittels der Gegenstände der unabhängigen Ansprüche. Unteransprüche geben bevorzugte Ausführungsformen wieder.

Offenbarung der Erfindung

Ein Antriebssystem für eine Arbeitsmaschine umfasst einen elektrischen Hauptantrieb; eine Schaltvorrichtung zur Verbindung des Hauptantriebs mit einem elektrischen Hauptnetz; einen elektrischen Hilfsantrieb; einen Frequenzumrichter zur Steuerung eines Drehmoments des Hilfsantriebs; eine Abtriebswelle zur Verbindung mit der Arbeitsmaschine; ein Planetengetriebe mit einem Hohlrad, einem Sonnenrad, einem Planetenrad und einem Planetenradträger, wobei das Hohlrad mit dem Hauptantrieb, das Sonnenrad mit der Abtriebswelle und der Planetenradträger mit dem Hilfsantrieb gekoppelt ist; einen Kupplungspfad mit einer Kupplung, um den Planetenradträger mit der Eingangswelle zu koppeln oder von ihr zu trennen; und eine Steuereinrichtung. Die Steuereinrichtung ist dazu eingerichtet, das Antriebssystem in einem ersten Bereich zu betreiben, in welchem die Kupplung geschlossen und die Schaltvorrichtung geöffnet ist, oder in einem zweiten Bereich, in welchem die Kupplung geöffnet und die Schaltvorrichtung geschlossen ist. Außerdem ist die Steuereinrichtung dazu eingerichtet, das Drehmoment des Hilfsantriebs während eines Übergangs zwischen dem ersten und dem zweiten Bereich über das durch den Hilfsantrieb dauerhaft bereitstellbare Drehmoment zu überhöhen.

Diese Konstellation kann insbesondere dann vorteilhaft sein, wenn die Steuerbarkeit der Drehzahl oder des Drehmoments der Arbeitsmaschine hauptsächlich in einem mittleren oder oberen Drehzahlbereich, insbesondere im zweiten Betriebsbereich, erforderlich ist. Ist beispielsweise eine Steuerbarkeit nur zwischen 100 % und ca. 60% erforderlich, so können die Hilfsantriebe so gering dimensioniert werden, dass sie das Hochlaufen des Antriebssystems im ersten Bereich alleine bewältigen, während des Übergangs vom ersten Bereich in den zweiten Bereich kurzzeitig überlastet und anschließend im zweiten Bereich vom Hauptantrieb unterstützt werden. Der Betrieb der Arbeitsmaschine erfolgt bevorzugt im Wesentlichen oder ausschließlich im zweiten Bereich.

Die Überhöhung des Drehmoments des Hilfsantriebs kann es erlauben, den Hilfsantrieb schwächer zu dimensionieren. Der Hilfsantrieb kann dadurch kleiner, leichteren oder kostengünstiger ausgeführt werden. Wird der Hilfsantrieb aus mehreren Motoren gebildet, so können mehrere Motoren verbessert in einem größeren zusammengefasst oder einer durch mehrere kleinere ersetzt werden. Im Betrieb des Antriebssystems kann ein verbesserter Wirkungsgrad erzielt werden. Durch die geringere Dimensionierung des Hilfsantriebs kann insbesondere das Installieren praktisch nicht genutzter Reserven vermieden werden.

Allgemein können einer oder mehrere Hilfsantriebe vorgesehen sein. Im Folgenden wird vereinfachend auf nur einen Hilfsantrieb abgestellt, falls einer oder mehrere mechanisch parallel geschaltete Antriebseinrichtungen gemeint sind.

Es ist bevorzugt, dass der eine oder die mehreren Hilfsantriebe derart dimensioniert sind, dass in einem Bereich ab einer Nenndrehzahl des Hauptantriebs die Summe der dauerhaft durch die Hilfsantriebe bereitstellbaren Drehmomente kleiner als ein Drehmomentbedarf der Arbeitsmaschine ist. Die Arbeitsmaschine hat üblicherweise einen Drehmomentbedarf, der von ihrer Drehzahl abhängig ist und einem vorbestimmten Verlauf folgt. Beispielsweise kann das Drehmoment von der Drehzahl in der zweiten oder dritten Potenz abhängig sein. Der Übergang zwischen dem ersten und dem zweiten Bereich erfolgt üblicherweise bei oder nahe der Nenndrehzahl des Hauptantriebs. Durch die schwächere Dimensionierung der Hilfsantriebe kann der Übergang zwischen den Bereichen nicht mehr allein auf der Basis des durch die Hilfsantriebe dauerhaft bereitgestellten Drehmoments durchgeführt werden, da der Drehmomentbedarf der Arbeitsmaschine auf diese Weise durch die Hilfsantriebe nicht gedeckt werden kann. Durch die kurzzeitige Überhöhung des Drehmoments kann jedoch gerade so lange, wie der Übergang zwischen den Bereichen erfordert, auch von den eigentlich unterdimensionierten Hilfsantrieben ausreichend Drehmoment bereitgestellt werden, um den Übergang zu ermöglichen. Eine Betriebsfähigkeit der Hilfsantriebe kann dadurch nicht beeinträchtigt werden.

In einer bevorzugten Ausführungsform umfasst der Hilfsantrieb einen Asynchronmotor. Diese elektrischen Antriebsmaschinen sind üblicherweise von Haus aus überlastbar. Eine übliche Asynchronmaschine kann beispielsweise kurzfristig bis zum Doppelten ihres dauerhaft bereitstellbaren Drehmoments oder bis zum 1,5-fachen ihrer dauerhaft umsetzbaren Leistung belastet werden, ohne dass ein dauerhafter Schaden eintritt.

Die Grenze der Leistungsfähigkeit des Hilfsantriebs ist üblicherweise durch eine maximale Temperatur bestimmt, die allgemein von äußeren Betriebsbedingungen sowie der umgesetzten mechanischen Leistung und einem Belastungsverlauf abhängig ist. Das Antriebssystem kann daher einen Temperatursensor am Hilfsantrieb umfassen, der bevorzugt mit der Steuereinrichtung verbunden ist. Die Steuereinrichtung kann dazu eingerichtet sein, das Drehmoment des Hilfsantriebs nur dann zu überhöhen, wenn die abgetastete Temperatur unterhalb eines vorbestimmten Schwellenwerts liegt. Auf diese Weise kann eine thermische Belastung des Hilfsantriebs berücksichtigt werden, der beispielsweise von einer Umgebungstemperatur oder einer zuvor erfolgten Drehmomentüberhöhung rührt.

In einer weiteren Ausführungsform umfasst das Antriebssystem einen bevorzugt mit der Steuereinrichtung verbundenen Temperatursensor am Frequenzumrichter. Die Steuereinrichtung ist bevorzugt dazu eingerichtet ist, das Drehmoment des zugeordneten Hilfsantriebs nur dann zu überhöhen, wenn die abgetastete Temperatur unterhalb eines weiteren vorbestimmten Schwellenwerts liegt. Der Frequenzumrichter umfasst bevorzugt eine Versorgungseinrichtung zur Bereitstellung einer Gleichspannung aus einem elektrischen Hilfsnetz, das Wechselstrom bereitstellt, und einen Wechselrichter zur Bereitstellung einer Wechselspannung zum Betrieb des Hilfsantriebs, üblicherweise in drei elektrischen Phasen. Eine Versorgungseinrichtung kann zur Speisung mehrerer Wechselrichter eingerichtet sein, die verschiedenen Hilfsantrieben zugeordnet sein können. Der Temperatursensor kann in der Versorgungseinrichtung oder im Wechselrichter eingesetzt werden. Jedem Temperatursensor kann ein eigener Schwellenwert zugeordnet werden. Es können auch mehrere Temperatursensoren am gleichen Gerät eingesetzt werden, beispielsweise an einzelnen Leistungshalbleitern.

Der Frequenzumrichter kann derart dimensioniert sein, dass ein dauerhaft durch ihn bereitstellbarer Strom nicht ausreicht, um das Drehmoment des zugeordneten Hilfsantriebs zu überhöhen. Anders ausgedrückt kann auch der Frequenzumrichter oder eine seiner Komponenten überlastfähig ausgeführt sein. Die Drehmomentüberhöhung des Hilfsantriebs kann dann eine Überlastung des Frequenzumrichters erfordern. Dadurch kann der Frequenzumrichter im Dauerbetrieb passend zum Hilfsantrieb dimensioniert werden. Ein üblicher Frequenzumrichter ist dazu eingerichtet, eine Überlastung von ca. 50% über eine Dauer von ca. 10 Sekunden auszuhalten. Durch eine nur wenig größere Dimensionierung von Elementen des Frequenzumrichters können diese Werte gesteigert werden. Üblicherweise kann für den kleineren Hilfsantrieb auch ein schwächer dimensionierter Frequenzumrichter gewählt werden, sodass Kosten, eine Baugröße oder ein Gewicht verringert sein können.

Der Frequenzumrichter kann derart dimensioniert sein, dass ein dauerhaft durch ihn bereitstellbarer Strom zum Betrieb des zugeordneten Hilfsantriebs in Überlast ausreicht. Dazu kann der Frequenzumrichter in einer Ausführungsform den ca. 1,5- bis 1,7-fachen Strom des sich im Dauerbetrieb befindlichen Hilfsantriebs bereitstellen. Eine noch stärkere Auslegung ist ebenfalls möglich.

Sind mehrere Hilfsantriebe vorgesehen, so kann die Steuereinrichtung dazu eingerichtet sein, die durch die Hilfsantriebe bereitgestellten Drehmomente zeitlich gestaffelt zu überhöhen. Beispielsweise kann die Überhöhung des Drehmoments der Hilfsantriebe nacheinander begonnen werden, bis in Summe ausreichend Drehmoment bereitgestellt werden kann. Nach dem Übergang zwischen dem ersten und dem zweiten Bereich können die Überhöhungen nacheinander beendet werden. In einem anderen Ausführungsbeispiel wird bei einem ersten Wechsel zwischen den Betriebsbereichen ein erster Hilfsantrieb überlastet und ein anderer bei einem folgenden Wechsel. Die Wahl des überlasteten Hilfsantriebs kann auf der Basis der Temperaturen der Hilfsantriebe erfolgen.

Ein Verfahren zum Steuern des oben beschriebenen Antriebssystems umfasst Schritte des Betreibens des Antriebssystems in einem ersten Bereich, in welchem die Kupplung geschlossen und die Schaltvorrichtung geöffnet ist, oder in einem zweiten Bereich, in welchem die Kupplung geöffnet und die Schaltvorrichtung geschlossen ist; des Ansteuerns des Frequenzumrichters derart, dass das Drehmoment des Hilfsantriebs über das durch den Hilfsantrieb dauerhaft bereitstellbare Drehmoment überhöht wird; des Wechselns des Betriebsbereichs; und des Beendens der Überhöhung des Drehmoments.

Das Verfahren kann insbesondere mittels der oben beschriebenen Steuervorrichtung durchgeführt oder gesteuert werden. Die Steuervorrichtung kann dazu einen programmierbaren Mikrocomputer oder Mikrocontroller umfassen und das Verfahren kann in Form eines Computerprogrammprodukts vorliegen, das auf der Steuervorrichtung ablaufen oder auf einem computerlesbaren Datenträger gespeichert sein kann. Merkmale oder Vorteile der Steuervorrichtung können auf das Verfahren angewandt werden und umgekehrt.

Die Erfindung wird nun mit Bezug auf die beigefügten Figuren genauer beschrieben, in denen:

Fig. 1    ein Antriebssystem;
Fig. 2    ein Überlagerungsgetriebe;
Fig. 3    eine Anordnung von Wellen in einem Überlagerungsgetriebe;
Fig. 4    ein Steuerdiagramm eines Antriebssystems;
Fig. 5    ein weiteres Steuerdiagramm;
Fig. 6    ein Ablaufdiagramm eines Verfahrens zum Steuern eines Überlagerungsgetriebes; und
Fig. 7    ein weiteres Ablaufdiagramm eines Verfahrens zum Steuern eines Überlagerungsgetriebes

darstellt.

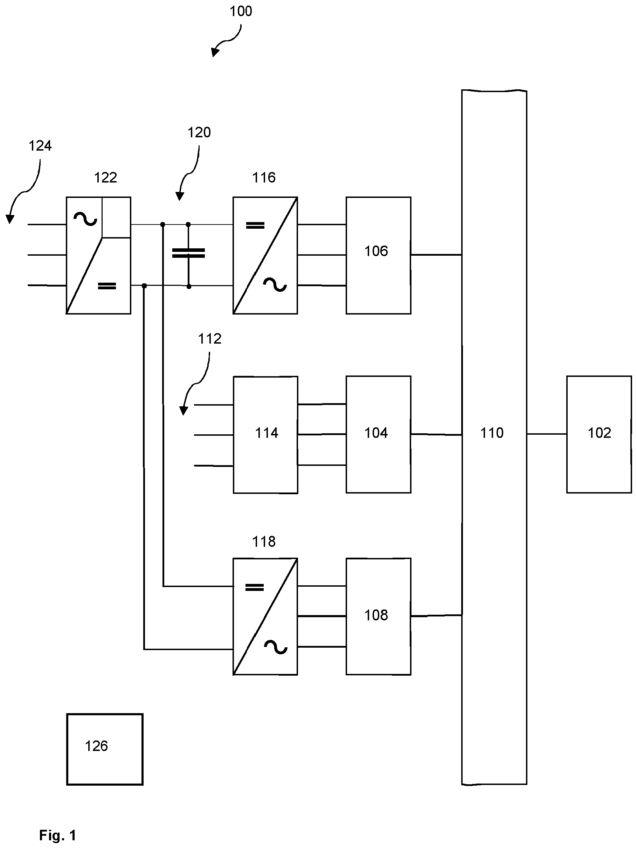

Figur 1 zeigt eine schematische Darstellung eines Antriebssystems 100. Um eine Arbeitsmaschine 102 anzutreiben sind ein elektrischer Hauptantrieb 104 sowie elektrische Hilfsantriebe 106 und 108 vorgesehen, die mittels eines Überlagerungsgetriebes 110 drehmomentschlüssig mit der Arbeitsmaschine 102 gekoppelt sind. In weiteren Ausführungsformen können auch nur ein Hilfsantrieb 106 oder mehr als zwei Hilfsantriebe 106, 108 eingesetzt werden.

Die Arbeitsmaschine 102 kann beispielsweise eine Kreiselpumpe, einen Kreiselverdichter, ein Gebläse, einen Kompressor oder eine Kohlemühle umfassen. Der Betrieb der Arbeitsmaschine 102 kann kritisch für den Betrieb oder die Sicherheit einer übergeordneten Einrichtung wie eines Kraftwerks oder einer Heizanlage sein. Mittels des Überlagerungsgetriebes 110 kann die Arbeitsmaschine 102 alternativ mittels des Hauptantriebs 104, einer oder mehrerer der Hilfsantriebe 106, 108 oder einer Kombination daraus angetrieben werden. Wie unten noch genauer ausgeführt wird, können dabei unterschiedliche Betriebszustände des Überlagerungsgetriebes 110 unterstützt werden.

Ein elektrisches Hauptnetz 112 kann mittels einer Schaltvorrichtung 114 mit dem Hauptantrieb 104 entweder verbunden oder von ihr getrennt werden. Der Hauptantrieb läuft, wenn er mit dem Hauptnetz 112 verbunden ist, mit einer vorbestimmten Nenndrehzahl. Die Hilfsantriebe 106 und 108 können bevorzugt mittels zugeordneter Wechselrichter 116 und 118 angesteuert werden, die aus einem Zwischenkreis 120 gespeist werden, der eine Gleichspannung bereitstellt. Die Wechselrichter 116, 118 können jeweils eine Drehzahl oder ein bereitgestelltes Drehmoment des zugeordneten Hilfsantriebs 106, 108 steuern. Dazu können eine Frequenz oder eine Spannung variiert werden, die dem jeweiligen Hilfsantrieb 106, 108 bereitgestellt wird. Die Steuerung der Hilfsantriebe 106, 108 erfolgt bevorzugt mittels einer feldorientierten Steuerung oder Regelung. Die für die Wechselrichter 116, 118 erforderliche Gleichspannung des Zwischenkreises 120 wird üblicherweise mittels einer Versorgungsvorrichtung 122 aus einem elektrischen Hilfsnetz 124 bereitgestellt. Das Hilfsnetz 124 ist üblicherweise getrennt vom Hauptnetz 112 ausgeführt und weniger stark belastbar. Die Kombination aus Versorgungsvorrichtung 122 und Wechselrichter 116, 118 wird auch Frequenzumrichter genannt.

Eine Steuereinrichtung 126 ist dazu eingerichtet, das Antriebssystem 100 und insbesondere das Überlagerungsgetriebe 110 zu steuern, insbesondere um die Drehzahl der Abtriebswelle 240 einer Vorgabe nachzuführen. Das Überlagerungsgetriebe 110 kann unterschiedliche Betriebszustände aufweisen, die insbesondere in Abhängigkeit einer Anforderung einer bereitzustellenden Drehzahl an der Arbeitsmaschine 102 eingestellt werden können. Ein Übergang zwischen den Betriebszuständen kann dabei durch die Steuereinrichtung 126 transparent gesteuert werden, sodass das Antriebssystem 100 lediglich die Solldrehzahl der Arbeitsmaschine 102 als externe Führungsgröße benötigen kann. Zur Steuerung des Antriebssystems 100 kann die Steuereinrichtung 126 eines oder mehrere mechanische Elemente des Überlagerungsgetriebes 110 und/oder einen der Wechselrichter 116, 118 ansteuern, um eine Drehzahl oder ein Drehmoment eines Hilfsantriebs 106, 108 zu beeinflussen. Gegebenenfalls ist die Steuereinrichtung 126 auch mit einem oder mehreren Sensoren zur Abtastung eines Betriebszustands des Antriebssystems 100 verbunden.

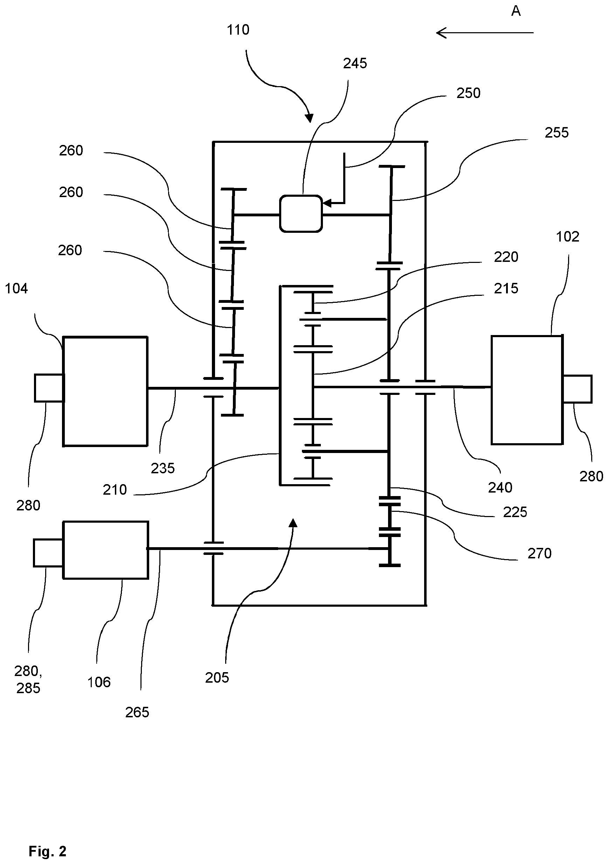

Figur 2 zeigt eine bevorzugte Ausführungsform eines Überlagerungsgetriebes 110 für den Einsatz in einem Antriebssystem 100 nach Figur 1. Zum leichteren Verständnis ist außer dem Hauptantrieb 104 nur ein Hilfsantrieb 106 dargestellt, üblicherweise ist jedoch noch wenigstens ein weiterer Hilfsantrieb 108 vorgesehen (vgl. Figur 1). Die Hilfsantriebe 106, 108 sind üblicherweise mechanisch parallel geschaltet und können elektrisch einzeln oder gemeinsam gesteuert werden.

Das Überlagerungsgetriebe 110 umfasst ein Planetengetriebe 205 mit einem Hohlrad 210, einem Sonnenrad 215, wenigstens einem Planetenrad 215 und einem Planetenradträger 225. Das Planetenrad 215 steht mit dem Hohlrad 210 und dem Sonnenrad 215 in Eingriff und ist drehbar gegenüber einem Bolzen 230 gelagert, der am konzentrisch zum Sonnenrad 215 drehbaren Planetenradträger angebracht ist. Das Hohlrad 210 ist mit einer Antriebswelle 235 zur Verbindung mit dem Hauptantrieb 104 und das Sonnenrad 215 mit einer Abtriebswelle 240 zur Verbindung mit der Arbeitsmaschine 102 verbunden. Das Planetengetriebe 205 bildet ein Summiergetriebe, das die Drehbewegungen des Hauptantriebs 104 und des Hilfsantriebs 106 additiv oder subtraktiv zusammenfassen und an die Arbeitsmaschine 102 abgeben kann.

Weiter ist eine schaltbare Kupplung 245 vorgesehen, die mittels eines Aktuators 250 geöffnet oder geschlossen werden kann. Die Kupplung 245 kann formschlüssig, reibschlüssig oder mittels hydrodynamischer Wandlung arbeiten und ist dazu eingerichtet, die Drehbewegung des Planetenradträgers 245 an die Eingangswelle 235 bzw. das Hohlrad 210 rückzukoppeln. Es können statt einer Kupplung 245 auch mehrere mechanisch parallel geschaltete Kupplungen 245 vorgesehen sein, beispielsweise um die einzelnen Kupplungen 245 kompakter auszuführen oder um einen zur Verfügung stehenden Bauraum verbessert auszunutzen. In der dargestellten Ausführungsform ist eine Seite der Kupplung 245 mittels einer Getriebestufe 255 an den Planetenradträger 245 und die andere Seite mittels einer Serie von Übertragungsrädern 260 mit der Eingangswelle 235 gekoppelt. Mittels der Übertragungsräder 260 kann eine weitere Getriebestufe gebildet werden. Die gesamte Übertragung der Drehbewegung vom Planetenradträger 225 bis zum Hohlrad 210 wird Kupplungspfad genannt.

In der dargestellten Ausführungsform ist der Hilfsantrieb 106 über eine Hilfswelle 270 und bevorzugt eine weitere Getriebestufe 270 an den Planetenradträger 225 angebunden. In dieser Ausführungsform kann die eine Seite der Kupplung 245 auch mit der Getriebestufe 270 und die andere Seite über die Übertragungsräder 260 mit der Antriebswelle 235 verbunden sein. Übersetzungsverhältnisse der Getriebestufen 255, 270 können jeweils nach Bedarf gewählt werden.

Allgemein gilt:

| n1: | Drehzahl Abtriebswelle 240 = Drehzahl Sonnenrad 215 |
| n2: | Drehzahl Hauptantrieb 104 = Drehzahl Hohlrad 210 |
| n3: | Drehzahl Hilfsantrieb 106, 108 |
| n-Zwischenwelle: | Drehzahl im Kupplungspfad (an der Kupplung 245) |
| $i_{PG}$: | Übersetzung Planetengetriebe 205 (= n1 / n2) |
| $i_{SG1}$: | Übersetzung Getriebestufe (270) (= n3 / n-Planetenradträger 225) |
| $i_{SG2}$: | Übersetzung Getriebestufe (255) (= n2 / n3 oder = n-Zwischenwelle / n-Planetenradträger 225) |
| $i_{SG3}$: | Übersetzung Getriebestufe (260) (= n-Zwischenwelle / n2) |

In einem unteren Drehzahlbereich kann die Arbeitsmaschine 102 bei abgeschaltetem Hauptantrieb 104 und geschlossener Kupplung 245 bis zu einer Drehzahl angetrieben werden, die durch die Leistungsfähigkeit des Hilfsantriebs 104 und die Belastbarkeiten der Kupplung 245, des Planetengetriebes 205, der Getriebestufen 255, 270 und der Übertragungsräder 260 begrenzt ist. Diese Drehzahl liegt üblicherweise bei ca. 40 - 60% der Maximaldrehzahl der Abtriebswelle 240. Die Drehzahl der Arbeitsmaschine 102 kann dabei über die Drehzahl des Hilfsantriebs 106, 108 ab dem Stillstand gesteuert werden. Die Drehzahl des Hauptantriebs 104 ist über die Kupplung 245 an die des Hilfsantriebs 102 gekoppelt.

In einem oberen Drehzahlbereich kann die Arbeitsmaschine 102 bei eingeschaltetem Hauptantrieb 104 und geöffneter Kupplung bis zur Maximaldrehzahl angetrieben werden. Der Hauptantrieb 104 ist in seiner Drehzahl nicht steuerbar, er läuft üblicherweise mit einer festen Nenndrehzahl. Die niedrigste Drehzahl der Abtriebswelle in diesem Betriebszustand ist durch die Nenndrehzahl des Hauptantriebs 104 vorgegeben. Durch Ansteuern des Hilfsantriebs 106 kann die Drehzahl der Abtriebswelle 240 bis zur Maximaldrehzahl gesteigert werden, die von der Drehzahlfestigkeit des Hilfsantriebs 106 und der Belastbarkeit des Überlagerungsgetriebes 110 abhängig ist.

Bei einem Übergang zwischen dem unteren Drehzahlbereich (erster Betriebszustand oder Bereich I) und dem oberen Drehzahlbereich (zweiter Betriebszustand oder Bereich II) werden üblicherweise die Drehzahl des Hilfsantriebs 106 und der Betätigungszustand der Kupplung 245 geändert. Für einen verschleißarmen Übergang ist der untere Drehzahlbereich bevorzugt derart gewählt, dass der Hauptantrieb 104 seine Nenndrehzahl durch Antreiben des Überlagerungsgetriebes 110 nur mittels des Hilfsantriebs 106 erreichen kann. Wird der Hauptantrieb 104 bei seiner Nenndrehzahl eingeschaltet, so kann eine Belastung des Hauptnetzes 112 gering gehalten sein. Insbesondere kann ein hoher Einschaltstrom, der ansonsten für das Beschleunigen des Läufers des Hauptantriebs 104 erforderlich ist und das ca. 8-fache des Dauerstroms betragen kann, entfallen.

Zur Drehzahlregelung und zum Überlastschutz können Drehzahlsensoren 280 am Hauptantrieb 104, dem Hilfsantrieb 106 und/oder der Arbeitsmaschine 102 vorgesehen sein. Ist der Öffnungszustand der Kupplung 245 bekannt, so kann eine der Drehzahlen aus den anderen beiden bestimmt werden, sodass zwei Drehzahlsensoren 280 am Überlagerungsgetriebe 110 ausreichen können. Optional kann auch ein Temperatursensor 285 an einem der Hilfsantriebe 106, 108 vorgesehen sein, um eine thermische Überlastung zu verhindern. Ein Temperatursensor 285 kann auch am Wechselrichter 116, 118 oder der Versorgungseinrichtung 122 in Figur 1 vorgesehen sein.

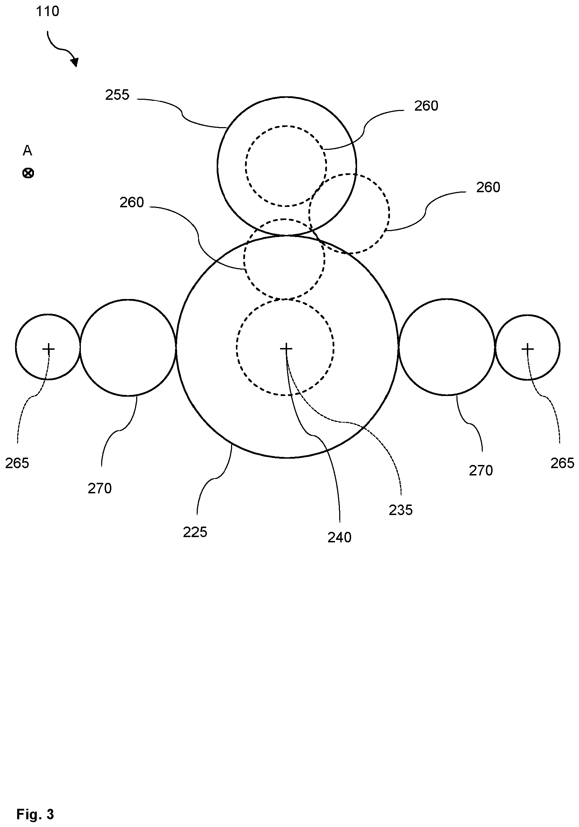

Figur 3 zeigt eine beispielhafte Ausführungsform einer Anordnung der Eingangswelle 235, der Hilfswellen 265 und der Abtriebswelle 240 an einem Überlagerungsgetriebe 110. Verdeckte Elemente sind mit unterbrochenen Linien dargestellt. Die Blickrichtung bezüglich der in Figur 2 dargestellten Ausführungsform ist mit A gekennzeichnet. Abweichend von der in Figur 2 dargestellten Ausführungsform sind hier zwei Hilfswellen 265 auf einander entgegengesetzten Seiten der Abtriebswelle 240 vorgesehen. Die Kupplung 245 ist bevorzugt im Bereich der Getriebestufe 255 vorgesehen, sodass die Drehachsen der Kupplung 245 und der Hilfsantriebe 106, 108 durch Ecken eines insbesondere gleichschenkligen Dreiecks verlaufen. Die Antriebswelle 235 liegt bevorzugt konzentrisch zur Abtriebswelle 240.

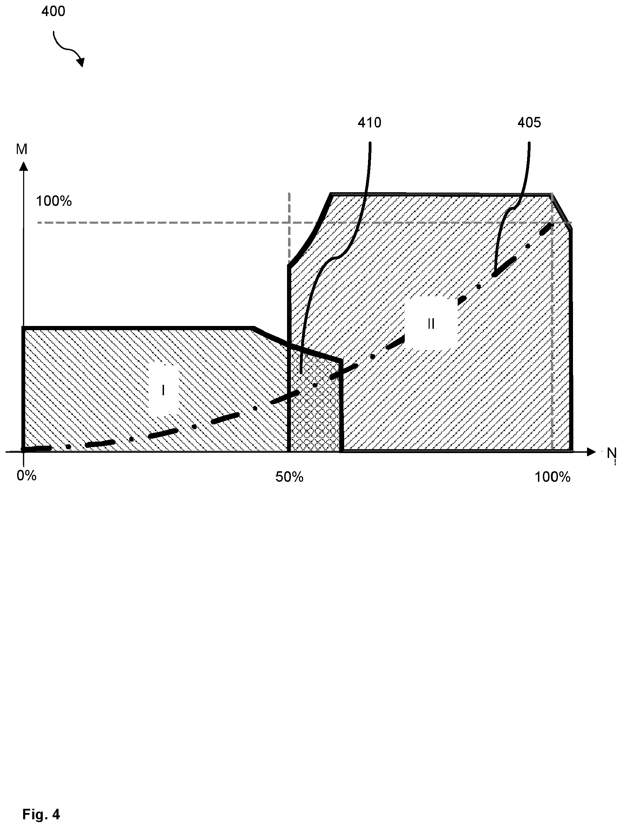

Figur 4 zeigt ein beispielhaftes Steuerdiagramm 400 des Antriebssystems 100 mit dem Überlagerungsgetriebe 110. In horizontaler Richtung ist eine Drehzahl N der Arbeitsmaschine 102 als Anteil einer vorbestimmten Maximaldrehzahl und in vertikaler Richtung ein relatives Drehmoment M als Anteil eines vorbestimmten Maximalmoments angetragen. Eine Kennlinie 405 zeigt den Drehmomentbedarf einer beispielhaft gewählten Arbeitsmaschine 102 über die Drehzahl. Das Drehmoment M der Kennlinie 405 folgt hier beispielhaft einer quadratischen oder kubischen Funktion der Drehzahl N. Je stärker das Moment M der Kennlinie 405 mit der Drehzahl N ansteigt, desto kleiner ist das relative Moment bei niedrigen Drehzahlen. Die Kennlinie 405 kann auch ein stärkeres Wachstum zeigen, beispielsweise wenn sie einem Polynom höherer Ordnung folgt. Werden ausreichend starke Hilfsantriebe 106, 108 verwendet, so kann auch eine langsamer wachsende Funktion, beispielsweise eine lineare Funktion, unterstützt werden.

Ein Bereich I zeigt mögliche Arbeitspunkte des Überlagerungsgetriebes 110, wenn der Hauptantrieb 104 abgeschaltet ist und der Antrieb der Arbeitsmaschine 102 ausschließlich über die Hilfsantriebe 106, 108 erfolgt. Die Kupplung 245 ist dabei geschlossen. Ein Bereich II zeigt mögliche Arbeitspunkte bei eingeschaltetem Hauptantrieb 104 und geöffneter Kupplung 245. Um die Arbeitsmaschine 102 über den gesamten Drehzahlbereich von 0% bis 100% steuern zu können, müssen sich die Bereiche I und II in einem Bereich 410 überschneiden und wenigstens ein Punkt der Kennlinie 405 der Arbeitsmaschine 102 muss in diesem Bereich 410 enthalten sein. Für diese Auslegung müssen in Abhängigkeit der verfügbaren Drehzahlspreizung und der Kennlinie 405 ca. 20 - 30 % elektrischer Regelleistung an den Hilfsantrieben 106, 108 installiert werden. Damit wird für den Bereich II ein Drehzahlregelbereich von 50 - 100% realisiert und die Übersetzung des Kupplungspfads muss so gewählt werden, dass der Bereich I einen Drehzahlbereich bis mindestens 50% der Maximaldrehzahl der Abtriebswelle 240 abdeckt. Bevorzugt wird die resultierende Übersetzung über die Kupplung 245, zwischen den elektrischen Hilfsantrieben 106, 108 und der Eingangswelle 235, so gewählt, dass die Nenndrehzahl des Hauptantriebs 104 ebenfalls innerhalb des Überschneidungsbereichs 410 liegt. In diesem Fall kann der Betriebszustandsübergang zwischen Bereich I (Hauptantrieb 104 ist deaktiviert) und Bereich II (Hauptantrieb 104 ist aktiviert) erfolgen, indem die Kupplung 245 mittels des Aktuators 250 geöffnet und der Hauptantrieb 104 bei oder nahe seiner Nenndrehzahl an das elektrische Hauptnetz 112 geschaltet wird. Die beschriebene Auslegung erlaubt einen quasi kontinuierliche Drehzahlsteuerung der Arbeitsmaschine 102 entlang der Lastkennlinie 405.

In vielen Anwendungsfällen ist eine Steuerbarkeit der Drehzahl der Arbeitsmaschine 102 jedoch gar nicht über den gesamten Drehzahlbereich, sondern nur in einem mittleren und hohen Drehzahlbereich, beispielsweise nur zwischen 60% und 100%, erforderlich. Die Hilfsantriebe 106, 108 sind dann zur Ermöglichung des beschriebenen Betriebszustandswechsels überdimensioniert, wodurch das Antriebssystem 100 größer und schwerer ausgeführt sein kann und zusätzliche Kosten für die große Dimensionierung der Hilfsantriebe 106, 108 der zugeordneten Wechselrichter 116, 118 sowie der Versorgungsvorrichtung 122 anfallen können. Es wird daher vorgeschlagen, die Hilfsantriebe 106, 108 schwächer zu dimensionieren.

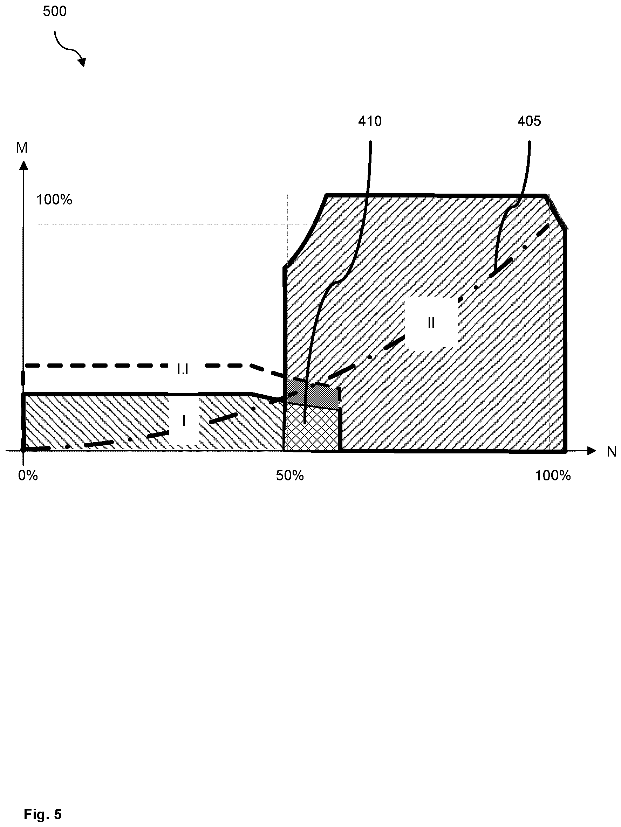

Figur 5 zeigt ein weiteres Steuerdiagramm 500 nach Art der Darstellung von Figur 4. Hier sind die Leistungen der Hilfsantriebe 106, 108 kleiner gewählt, sodass sich der Bereich I in vertikaler Richtung flacher als in Figur 4 erstreckt. Die Kennlinie 405 weist mit dem Bereich 410, in welchem sich die Bereiche I und II überschneiden, jedoch keinen gemeinsamen Punkt mehr auf. Dadurch kann ein quasi kontinuierlicher Betriebszustandsübergang zwischen den Bereichen I und II, der die Aktivierung des Hauptantriebs 104 und somit eine nahtlose Drehzahlregelung der Arbeitsmaschine 102 erlaubt, nicht auf die beschriebene Weise erfolgen.

Es wird weiter vorgeschlagen, eine Überlastfähigkeit der Hilfsantriebe 106, 108 auszunutzen, sodass der Bereich I kurzzeitig auf einen Bereich I.I ausgedehnt werden kann. Dabei wird der Bereich I kurzzeitig in Richtung des Drehmoments M - aber nicht in Richtung der Drehzahl N - erweitert. Der Überschneidungsbereich 410 wird dadurch ebenfalls größer, sodass er von der Kennlinie 405 in wenigstens einem Punkt geschnitten wird. In diesem Schnittbereich kann der Betriebszustandswechsel zwischen den Bereichen I und II durchführt werden. Diese Vorgehensweise erlaubt es, geringer dimensionierte Hilfsantriebe 106, 108 einzusetzen und trotzdem einen flüssigen und schonenden Übergang zwischen den Bereichen I und II zu ermöglichen. Diese Technik eignet sich besonders für Anwendungsfälle, in denen die Drehzahl der Abtriebswelle hauptsächlich in einem oberen Drehzahlbereich gesteuert werden soll, beispielsweise in einem Bereich 60 - 100%, 75 - 100% oder 80 - 100% der Maximaldrehzahl.

Die Hilfsantriebe 106, 108 können insbesondere als elektrische Asynchronmaschinen ausgebildet sein, sodass das durch sie bereitgestellte Drehmoment kurzzeitig bis zum ca. 2-fachen des Bemessungsdrehmoments und die bereitgestellte Leistung kurzzeitig bis zum ca. 1,5-fachen der Bemessungsleistung betragen kann. Die Bemessungsgrenzen sind dabei auf einen Dauerbetrieb bezogen, der ohne weitere Beschränkungen dauerhaft aufrechterhalten werden kann. Wie groß die erhöhte bereitgestellte Leistung der Hilfsantriebe 106, 108 tatsächlich ist und wie lange sie abgegeben werden kann, hängt üblicherweise von Temperaturen der Hilfsantriebe 106, 108 ab.

In einer Ausführungsform wird eine Temperatur eines Hilfsantriebs 106, 108, beispielsweise eine Wicklungstemperatur seiner Ständerwicklung, etwa mittels eines Kaltleiters (PTC) oder eines Messwiderstands (z. B. Pt100) aufgenommen. Übersteigt die Temperatur einen vorbestimmten Schwellenwert, so können die Wechselrichter 116, 118 angesteuert werden, die bereitgestellte Leistung zu verringern. Eine solche Überwachung kann insbesondere bei Anwendungen sinnvoll sein, die Anforderungen an den Explosionsschutz und dessen Berücksichtigung durch die Hilfsantriebe 106, 108 erfordern, beispielsweise im Offshore-Bereich oder unter Tage. In diesen Applikationen können die Hilfsantriebe 106, 108 nur für einen sehr kurzen Zeitanteil im Bereich I.I betrieben werden. Für diesen Fall sollte das Antriebssystem 100 so ausgelegt sein, dass die zulässige Verweildauer im Bereich I.I den Betriebszustandswechsel sicher erlaubt.

Die Überlastbarkeit des Antriebssystems 100 kann auch durch die verwendeten Wechselrichter 116, 118 oder die Versorgungseinrichtung 122 begrenzt sein. Diese Beschränkung kann insbesondere für Anwendungen des Antriebssystems 100 ohne Anforderungen an den Explosionsschutz gelten. Typische Schalt- und Gleichrichtelemente innerhalb der Komponenten 116, 118 und 122 können für eine Zeitdauer von ca. 10 Sekunden über deren Nennstrom bzw. Nennleistung überlastet werden. Zum Schutz vor Überlastung können auch die Komponenten 116, 118 oder 122 auf Übertemperatur überwacht werden.

In jedem Fall sollten die elektrischen Schalt- und Gleichrichtelemente innerhalb der Komponenten 116, 118 und 122 so dimensioniert werden, dass ein sicherer Übergang zwischen den Bereichen I und II gewährleistet ist. Dafür müssen die Komponenten nicht unbedingt stärker als in einer Lösung nach dem Stand der Technik ausgelegt werden, da sie in Anpassung an die schwächer dimensionierten Hilfsantriebe 106, 108 eingangs geringer dimensioniert werden konnten.

In einer weiteren Ausführungsform können die Hilfsantriebe 106, 108 zeitlich gestaffelt betrieben werden, um eine thermische Erholung der Komponenten 116, 118 und 122 oder ihrer Bestandteile zu erlauben. Eine verstärkte Dimensionierung der Komponenten 116, 118 und 122 kann dadurch nicht erforderlich sein. Auch die Hilfsantriebe 106, 108 können sich bei einer zeitlich versetzten Betriebsweise schneller oder weiter thermisch erholen.

Erneut Bezug nehmend auf Figur 2 wird nachfolgend der Leistungsfluss durch das Überlagerungsgetriebe 110 beim Wechsel zwischen dem Bereich I und dem Bereich II betrachtet.

Beim Übergang vom Bereich I zum Bereich II bewirkt das Schließen der Kupplung 245 ein Koppeln des Planetenradträgers 225 mit der Antriebswelle 235 bzw. dem Hohlrad 210. Dadurch ist die Abtriebswelle 240 die einzige verbleibende Einzelwelle des Planetengetriebes 205. Der Planetenradträger 225 wird zur freien Koppelwelle und das Hohlrad 210 zur angeschlossenen Koppelwelle. Ist die Kupplung 245 geschlossen, wird das Überlagerungsgetriebe 110 im Zwei-Wellen-Betrieb als zwangsläufiges Getriebe mit einem Freiheitsgrad von 1 betrieben. Somit wird am Planetengetriebe 205 nur noch eine Drehzahl vorgegeben, die über einen oder beiden Hilfsantriebe 106, 108 eingeprägt wird. Die Drehzahlen der Eingangswelle 235 und der Abtriebswelle 240 sind durch die Auslegung des Überlagerungsgetriebes 110, insbesondere des Planetengetriebes 205 und der Getriebestufen 255 und 280, festgelegt.

Durch die Kopplung entsteht ein zirkulierender Leistungsfluss, der Blindleistung genannt wird, weil der Betriebspunkt des Überlagerungsgetriebes 110 im gekoppelten Zustand gleich bleibt und somit auch die Drehmomenten- oder Drehzahlverhältnisse im Überlagerungsgetriebe 110 dieselben sind. Die Leistung, die bei offener Kupplung 245 über die Hilfsantriebe 106, 108 eingespeist wird, zirkuliert bei geschlossener Kupplung 245 über den Kupplungspfad, der vom Planetenradträger 225, durch die Kupplung 245 und zur Antriebswelle 235 bzw. zum Hohlrad 210 führt. Zusätzlich wird die motorische Leistung der Hilfsantriebe 106, 108 ebenfalls über den Kupplungspfad in das Überlagerungsgetriebe 110 eingespeist. Die Gesamtleistung im Kupplungspfad ist somit betragsmäßig größer als die Summe der von den Hilfsantrieben 106, 108 eingeprägten Leistungen. Ein einfacher Übergang vom Bereich I in den Bereich II resultiert in diesem Fall in einer sehr hohen Belastung im Kupplungspfad vom Planetenradträger 225 zur Antriebswelle 235 bzw. dem Hohlrad 210, sodass die Komponenten 225, 245, 260 erheblich überdimensioniert werden müssen.

Zum Übergang zwischen den Bereichen I und II ist es vorteilhaft, das resultierende Drehmoment über den Kupplungspfad vom Planetenradträger 225 zur Antriebswelle 235 bzw. dem Hohlrad 210 zu reduzieren, sodass auch die Kupplungsleistung und der Kupplungsverschleiß reduziert werden kann.

Es wird vorgeschlagen, das Öffnen oder Schließen der Kupplung 245, also den Übergang zwischen den Bereichen I und II, dadurch vorzubereiten, dass ein Betriebspunkt eingestellt wird, an dem die Drehzahl der geschlossenen Kupplung 245 den Drehzahlen der beiden Seiten der geöffneten Kupplung 245 möglichst genau entspricht. Gelingt dies, kann die Kupplung 245 synchronisiert betätigt werden, sodass keine Leistungsspitze entsteht.

Das Drehzahl-Gleichgewicht bei geöffneter Kupplung ist erreicht, wenn folgende Willis-Gleichung erfüllt ist:

$$n1 - \left(i_{PG} \cdot n2\right) - \left(1 - i_{PG}\right) \cdot \frac{n3}{i_{SG1}} = 0 \qquad \text{(Gleichung 1)}$$

Außerdem muss am Synchronisierungspunkt die Drehzahl n2 des Hauptantriebs 104 bei offener und geschlossener Kupplung 245 gleich sein. Bei geschlossener Kupplung 245 muss also gelten:

$$n2 = n3 \cdot i_{SG2} \qquad \text{(Gleichung 2)}$$

Sind die Gleichungen 1 und 2 wenigstens näherungsweise erfüllt, so kann die Kupplung 245 mit minimalem Schlupf geöffnet oder geschlossen werden. Durch Einsetzen der Gleichung 1 in Gleichung 2 kann die Bedingung nicht nur für n2 und n3, sondern alternativ auch in Abhängigkeit von den anderen Drehzahlen ausgedrückt werden. Das Übersetzungsverhältnisses $i_{SG2}$ wird so gewählt, dass die Drehzahl am Synchronisierungspunkt im Regelbereich der Antriebsvorrichtung liegt. Bei einer Ausführung mit einer Zusatztriebverbindung, die vom Hilfsantrieb 106, 108 über die Getriebestufe 270 auf den Planetenradträger 225, von dort über die Getriebestufe 255 zur Kupplung 245 und über eine weitere Getriebestufe weiter auf die Eingangswelle 235 und das Hohlrad 210 wirkt, gilt bei geschlossenen Kupplung 245 anstatt Gleichung 2 folgende Gleichung:

$$n2 = n3 \cdot \left( \frac{i_{SG2}}{i_{SG3} \cdot i_{SG1}} \right) \qquad \text{(Gleichung 3)}$$

Für das Drehmoment T gilt bei geöffneter Kupplung 245:

$$T1 + T2 + TS = 0 \qquad \text{(Gleichung 4a)}$$

$$T1 = -T2/i_{PG} \qquad \text{(Gleichung 4b)}$$

$$TS = T_{Hilfsantrieb} * i_{SG1} \qquad \text{(Gleichung 4c)}$$

$$TS = T1 * (i\_PG-1) \qquad \text{(Gleichung 4d)}$$

Bei geschlossener Kupplung 245 gilt für das Drehmoment:

$$Ts = T2 \cdot \left( \frac{1}{i_{PG}} - 1 \right) + T_{Hilfsantrieb} \cdot i_{SG1} \qquad \text{(Gleichung 5)}$$

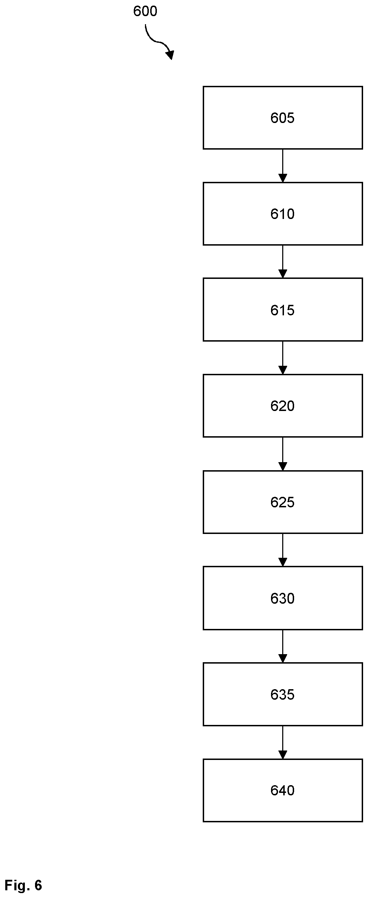

Figur 6 zeigt ein Ablaufdiagramm eines Verfahrens 600 zum Steuern eines Übergangs eines Überlagerungsgetriebes 110 nach der Art von Figur 2 von Bereich I nach Bereich II.

In einem Schritt 605 wird das Überlagerungsgetriebe 110 im Bereich I betrieben. Drehmoment wird über die Hilfsantriebe 106, 108 eingeleitet, die Kupplung 245 ist geschlossen, der Hauptantrieb 104 ist abgeschaltet, wird aber durch Kopplung über den Kupplungspfad auf einer Drehzahl gehalten, die an die Drehzahl der Abtriebswelle 240 gekoppelt ist.

In einem Schritt 610 erreicht der Hauptantrieb 104 eine Synchronisierungsdrehzahl, die seiner Nenndrehzahl entspricht, zumindest näherungsweise. Obwohl ein möglichst genaues Erreichen bevorzugt ist, kann es bereits ausreichen, dass die Drehzahl in einem Bereich von ca. $\pm 30\%$, bevorzugt ca. $\pm 15\%$, noch weiter bevorzugt ca. $\pm 5\%$ um die

Synchronisierungsdrehzahl liegt. In einem Schritt 615 wird der Hauptantrieb 104 eingeschaltet, beispielsweise indem er mittels der Schaltvorrichtung 114 mit dem Hauptnetz 112 verbunden wird. Wie oben genauer ausgeführt wurde, kann es erforderlich sein, das durch die Hilfsantriebe 106, 108 bereitgestellte Drehmoment zu überhöhen, um den folgenden Übergang vom Bereich I in den Bereich II zu ermöglichen. In diesem Fall kann die Überhöhung im Schritt 610 begonnen werden.

In einem Schritt 620 wird das über die Kupplung 245 übertragene Drehmoment kompensiert, indem wenigstens einer der Hilfsantriebe 106, 108 mit generatorischer Leistung, also als gesteuerte Bremse, betrieben wird. Die Bremswirkung wird derart dosiert, dass die Gleichungen 4c und 4d unter Vorgabe des Lastmoments T1 und der Drehzahl des Hauptantriebs 104 erfüllt sind. Das Lastmoment T1 kann beispielsweise als Parameterwert, Konstante, oder in Abhängigkeit der Drehzahl des Hauptantriebs 104 bestimmt werden. Die Drehzahl des Hauptantriebs 104 kann der Nenndrehzahl oder einer aktuellen Drehzahl des Hauptantriebs 104 entsprechen, die etwa mittels des zugeordneten Drehzahlsensors 280 abgetastet werden kann.

In einer weiteren Ausführungsform wird T1 aus der motorischen Leistung der Hilfsantriebe 106 und/oder 108 mit oder ohne Berücksichtigung der Verlustmechanismen im Überlagerungsgetriebe 110 oder der Hilfsantriebe 106 und/oder 108 bestimmt.

In noch einer weiteren Ausführungsform wird T1 auf der Basis der motorischen Leistung des Hauptantriebs 104 bestimmt, wobei die Hilfsantriebe 106 und/oder 108 passiv sind. Verlustmechanismen im Überlagerungsgetriebe 110 und/oder des Hauptantriebs 104 können berücksichtigt werden.

In wieder einer weiteren Ausführungsform wird an einer der Wellen 235, 240 und 265 des Überlagerungsgetriebes 110 ein übertragenes Drehmoment abgetastet T1 auf dieser Basis mittels der Willisgleichungen (vgl. Gleichung 1 und 2) bestimmt.

In einem Schritt 625 wird die Kupplung 245 geöffnet, beispielsweise indem der Aktuator 250 betätigt wird. In einem nachfolgenden Schritt 630 wird das durch die Hilfsantriebe 106, 108 bereitgestellte Drehmoment beibehalten oder nachgestellt, um das Stützmoment bereitzustellen, das im Bereich II im eingestellten Betriebspunkt der Arbeitsmaschine 102 erforderlich ist.

In einem Schritt 635 arbeitet das Überlagerungsgetriebe 110 im Bereich II mit geöffneter Kupplung 245 bei Synchronisierungsdrehzahl. Wurden für den Übergang vom Bereich I in den Bereich II die Hilfsantriebe 106, 108 angesteuert, Drehmoment bereitzustellen, das größer als ihr dauerhaft lieferbares Drehmoment ist, so kann die Überhöhung nach erfolgtem Bereichsübergang spätestens im Schritt 635 beendet werden. Anschließend kann in einem Schritt 640 mit dem Betrieb im Bereich II fortgefahren werden, wobei die Drehzahl der Abtriebswelle 240 durch Steuern der Drehzahl der Hilfsantriebe 106, 108 über die Nenndrehzahl des Hauptantriebs 104 gesteigert werden kann.

Das Verfahren 600 kann in weiteren Varianten durchgeführt werden. Beispielsweise können in den genannten Schritten jeweils benachbarte zusammengefasst und parallel oder nebenläufig ausgeführt werden. Alternativ können benachbarte Schritte auch miteinander vertauscht werden, sodass sie in umgekehrter Reihenfolge ausgeführt werden. In einer besonders bevorzugten Ausführungsform werden die Schritte 615 und 620 gleichzeitig oder nebenläufig durchgeführt, um einen Drehmomentstoß, der beim Anschalten des Hauptantriebs 104 auftreten kann, möglichst zu kompensieren.

In noch einer weiteren Ausführungsform des Verfahrens 600 wird die Reihenfolge der Schritte 615, 620, 625 geändert in 620, 625, 615. Bereits im Schritt 610 wird als Synchronisierungsdrehzahl eine höhere als die Nenndrehzahl des Hauptantriebs 104 verwendet. Während der Schritte 620 und 625, die vor dem Einschalten des Hauptantriebs 104 im Schritt 615 durchgeführt werden, kann die Drehzahl des Hauptantriebs 104 wieder leicht absinken, sodass der Hauptantrieb 104 nahe seiner Nenndrehzahl an das elektrische Versorgungsnetz 112 geschaltet wird.

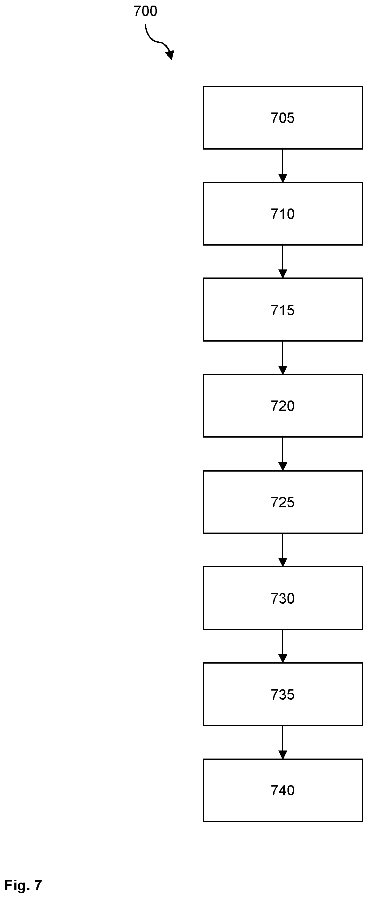

Figur 7 zeigt ein weiteres Ablaufdiagramm eines Verfahrens zum Steuern eines Übergangs eines Überlagerungsgetriebes 110 der Art von Figur 2 von Bereich II nach Bereich I. Einige der angegebenen Schritte entsprechen im Wesentlichen oder in ihrer Umkehrung Schritten, die oben mit Bezug auf Figur 6 bereits beschrieben wurden.

In einem Schritt 705 wird das Überlagerungsgetriebe 110 im Bereich II betrieben. Die Kupplung 245 ist geöffnet, der Hauptantrieb 104 ist eingeschaltet und die Hilfsantriebe 106, 108 stellen zusätzliches Drehmoment bereit. In einem Schritt 710 erreicht das Überlagerungsgetriebe 110 eine Synchronisierungsdrehzahl, die der Nenndrehzahl des Hauptantriebs 104 entspricht, zumindest näherungsweise. Obwohl ein möglichst genaues Erreichen bevorzugt ist, kann es bereits ausreichen, dass die Drehzahl in einem Bereich von ca. ±30%, bevorzugt ca. ±15%, noch weiter bevorzugt ca. ±5% um die Synchronisierungsdrehzahl liegt. Wie oben genauer ausgeführt wurde, kann es erforderlich sein, das durch die Hilfsantriebe 106, 108 bereitgestellte Drehmoment zu überhöhen, um den folgenden Übergang vom Bereich II in den Bereich I zu ermöglichen. In diesem Fall kann die Überhöhung im Schritt 710 begonnen werden.

In einem Schritt 715 wird das über die Kupplung 245 übertragene Drehmoment kompensiert, indem wenigstens einer der Hilfsantriebe 106, 108 mit generatorischer Leistung, also als gesteuerte Bremse, betrieben wird. Die Bremswirkung wird derart dosiert, dass die Gleichungen 4c und 4d unter Vorgabe des Lastmoments T1 und der Drehzahl des Hauptantriebs 104 erfüllt sind. Ausführungsformen und Varianten zur Bestimmung des Lastmoments T1 finden sich oben mit Bezug auf Schritt 620 des Verfahrens 620.

In einem Schritt 720 wird die Kupplung 245 geschlossen, insbesondere mittels des Aktuators 250. Der Hauptantrieb 104 wird abgeschaltet, indem bevorzugt die Schaltvorrichtung 114 den Hauptantrieb 104 vom Hauptnetz 112 trennt. In einem Schritt 730 wird ein Drehmoment, das mittels der Hilfsantriebe 106, 108 eingebracht wird, um die aktuelle Drehzahl n1 der Abtriebswelle 240 konstant zu halten, eingestellt. In einem Schritt 735 arbeitet das Überlagerungsgetriebe 110 bei der Synchronisierungsdrehzahl im Bereich II. Wurden für den Übergang vom Bereich II in den Bereich I die Hilfsantriebe 106, 108 angesteuert, Drehmoment bereitzustellen, das größer als ihr dauerhaft lieferbares Drehmoment ist, so kann die Überhöhung nach erfolgtem Bereichsübergang spätestens im Schritt 735 beendet werden. In einem Schritt 740 kann die Drehzahl der Abtriebswelle 240 und somit der Arbeitsmaschine 102 stufenlos unterhalb der Synchronisierungsdrehzahl gesteuert werden, indem die Hilfsantriebe 106, 108 entsprechend angesteuert werden.

Auch in diesem Verfahren können die angegebenen Schritte in der angegebenen Reihenfolge nacheinander durchgeführt werden. Aufeinander folgende Schritte können jeweils auch nebenläufig oder parallel zueinander durchgeführt werden. Parallel ausführbare Schritte können auch in der umgekehrten als der angegebenen Reihenfolge durchgeführt werden. Insbesondere können die Schritte 725 und 730 parallel ausgeführt werden, um den Abfall der Drehzahl n1 an der Abtriebswelle 240 durch die motorischen Drehmomente der Hilfsantriebe 106, 108 möglichst zu minimieren oder vollständig zu kompensieren.

In noch einer weiteren Ausführungsform wird im Verfahren 700 die Reihenfolge der Schritte 715, 720, 725 geändert in 725, 715, 720. Im Schritt 725 wird der Hauptantrieb 104 abgeschaltet. Im Schritt 715 erfolgt die Kompensation des Kupplungsmoments durch Steuerung der Hilfsantriebe 106, 108 mit generatorischer Leistung, und im Schritt 720 das Schließen der Kupplung 245. Auch in dieser Variante können aufeinander folgende Schritte nebenläufig oder parallel durchgeführt werden. Parallelisierbare Teile können in ihrer Bearbeitungsreihenfolge auch vertauscht werden.

Bezugszeichen

| | |
|-----|-----|
| 100 | Antriebssystem |
| 102 | Arbeitsmaschine |
| 104 | Hauptantrieb |
| 106 | erster Hilfsantrieb |
| 108 | zweiter Hilfsantrieb |
| 110 | Überlagerungsgetriebe |
| 112 | elektrisches Hauptnetz |
| 114 | Schaltvorrichtung |
| 116 | erster Wechselrichter |
| 118 | zweiter Wechselrichter |
| 120 | Zwischenkreis |
| 122 | Versorgungsvorrichtung |
| 124 | elektrisches Hilfsnetz |
| 126 | Steuereinrichtung |

| | |
|-----|-----|
| 205 | Planetengetriebe |
| 210 | Hohlrad |
| 215 | Sonnenrad |
| 220 | Planetenrad |
| 225 | Planetenradträger |
| 230 | Bolzen |
| 235 | Antriebswelle |
| 240 | Abtriebswelle |
| 245 | Kupplung |
| 250 | Aktuator |
| 255 | Getriebestufe |
| 260 | Übertragungsrad |
| 265 | Hilfswelle |
| 270 | Getriebestufe |
| 280 | Drehzahlsensor |
| 285 | Temperatursensor |

| | |
|-----|-----|
| 400 | Steuerdiagramm |

405     Kennlinie
410     Bereich

500     Steuerdiagramm

600     Verfahren
605     Betrieb im Bereich I
610     Synchronisierungsdrehzahl
615     Hauptantrieb einschalten
620     Kupplungsdrehmoment mittels Hilfsantrieben kompensieren
625     Kupplung öffnen
630     Stützmoment bereitstellen
635     Synchronisierungsdrehzahl
640     Betrieb im Bereich II

700     Verfahren
705     Betrieb im Bereich II
710     Synchronisierungsdrehzahl
715     Kupplungsdrehmoment mittels Hilfsantrieben kompensieren
720     Kupplung schließen
725     Hauptantrieb abschalten
730     Drehmoment einstellen
735     Synchronisierungsdrehzahl
740     Betrieb im Bereich I


**Patentansprüche**

1.  Antriebssystem (100) für eine Arbeitsmaschine, wobei das Antriebssystem (100) folgendes umfasst:

    - einen elektrischen Hauptantrieb (104);
    - eine Schaltvorrichtung (114) zur Verbindung des Hauptantriebs (104) mit einem elektrischen Hauptnetz (112);
    - einen elektrischen Hilfsantrieb (106, 108);
    - einen Frequenzumrichter zur Steuerung eines Drehmoments des Hilfsantriebs (106, 108);
    - eine Abtriebswelle (240) zur Verbindung mit der Arbeitsmaschine (102);
    - ein Planetengetriebe (205) mit einem Hohlrad (210), einem Sonnenrad (215), einem Planetenrad (220) und einem Planetenradträger (225), wobei das Hohlrad (210) mit dem Hauptantrieb (104), das Sonnenrad (215) mit der Abtriebswelle (240) und der Planetenradträger (225) mit dem Hilfsantrieb (106, 108) gekoppelt ist;
    - einen Kupplungspfad mit einer Kupplung (245), um den Planetenradträger (225) mit der Eingangswelle zu koppeln oder von ihr zu trennen; und
    - eine Steuereinrichtung, die dazu eingerichtet ist, das Antriebssystem (100) in einem ersten Bereich (I) zu betreiben, in welchem die Kupplung (245) geschlossen und die Schaltvorrichtung (114) geöffnet ist, oder in einem zweiten Bereich (II), in welchem die Kupplung (245) geöffnet und die Schaltvorrichtung (114) geschlossen ist;
    **dadurch gekennzeichnet, dass**
    - die Steuereinrichtung dazu eingerichtet ist, das Drehmoment des Hilfsantriebs (106, 108) während eines Übergangs zwischen dem ersten (I) und dem zweiten Bereich (II) über das durch den Hilfsantrieb (106, 108) dauerhaft bereitstellbare Drehmoment zu überhöhen.

2.  Antriebssystem (100) nach Anspruch 1, wobei einer oder mehrere Hilfsantriebe (106, 108) vorgesehen sind und die Hilfsantriebe (106, 108) derart dimensioniert sind, dass in einem Bereich ab einer Nenndrehzahl des Hauptantriebs (104) die Summe der dauerhaft durch die Hilfsantriebe (106, 108) bereitstellbaren Drehmomente kleiner als ein Drehmomentbedarf der Arbeitsmaschine (102) ist.

3.  Antriebssystem (100) nach Anspruch 1 oder 2, wobei der Hilfsantrieb (106, 108) einen elektrischen Asynchronmotor umfasst.

4.  Antriebssystem (100) nach einem der vorangehenden Ansprüche, ferner umfassend einen Temperatursensor (285) am Hilfsantrieb (106, 108), wobei die Steuereinrichtung dazu eingerichtet ist, das Drehmoment des Hilfsantriebs (106, 108) nur dann zu überhöhen, wenn die abgetastete Temperatur unterhalb eines vorbestimmten Schwellenwerts liegt.

5. Antriebssystem (100) nach einem der vorangehenden Ansprüche, ferner umfassend einen Temperatursensor (285) am Frequenzumrichter, wobei die Steuereinrichtung dazu eingerichtet ist, das Drehmoment des zugeordneten Hilfsantriebs (106, 108) nur dann zu überhöhen, wenn die abgetastete Temperatur unterhalb eines vorbestimmten Schwellenwerts liegt.

6. Antriebssystem (100) nach einem der vorangehenden Ansprüche, wobei der Frequenzumrichter derart dimensioniert ist, dass ein dauerhaft durch ihn bereitstellbarer Strom nicht ausreicht, um das Drehmoment des zugeordneten Hilfsantriebs (106, 108) zu überhöhen.

7. Antriebssystem (100) nach einem der Ansprüche 1 bis 5, wobei der Frequenzumrichter (116, 118, 122) derart dimensioniert ist, dass ein dauerhaft durch ihn bereitstellbarer Strom zum Betrieb des zugeordneten Hilfsantrieb (106, 108) in Überlast ausreicht.

8. Antriebssystem (100) nach einem der vorangehenden Ansprüche, wobei mehrere Hilfsantriebe (106, 108) vorgesehen sind und die Steuereinrichtung dazu eingerichtet ist, die durch die Hilfsantriebe (106, 108) bereitgestellten Drehmomente zeitlich gestaffelt zu überhöhen.

9. Verfahren zum Steuern eines Antriebssystems (100), das folgendes umfasst:

   - einen elektrischen Hauptantrieb (104);
   - eine Schaltvorrichtung (114) zur Verbindung des Hauptantriebs (104) mit einem elektrischen Hauptnetz;
   - einen elektrischen Hilfsantrieb (106, 108);
   - einen Frequenzumrichter zur Steuerung eines Drehmoments des Hilfsantriebs (106, 108);
   - eine Abtriebswelle (240) zur Verbindung mit der Arbeitsmaschine (102);
   - ein Planetengetriebe (205) mit einem Hohlrad (210), einem Sonnenrad (215), einem Planetenrad (220) und einem Planetenradträger (225), wobei das Hohlrad (210) mit dem Hauptantrieb (104), das Sonnenrad (215) mit der Abtriebswelle (240) und der Planetenradträger (225) mit dem Hilfsantrieb (106, 108) gekoppelt ist;
   - einen Kupplungspfad mit einer Kupplung (245), um den Planetenradträger (225) mit der Eingangswelle zu koppeln oder von ihr zu trennen;

   wobei das Verfahren folgende Schritte umfasst:

   - Betreiben (605, 705) des Antriebssystems (100) in einem ersten Bereich (I), in welchem die Kupplung (245) geschlossen und die Schaltvorrichtung (114) geöffnet ist, oder in einem zweiten Bereich (II), in welchem die Kupplung (245) geöffnet und die Schaltvorrichtung (114) geschlossen ist;
   - Ansteuern (620, 715) des Frequenzumrichters derart, dass das Drehmoment des Hilfsantriebs (106, 108) über das durch den Hilfsantrieb (106, 108) dauerhaft bereitstellbare Drehmoment überhöht wird;
   - Wechseln (615, 625, 720, 725) des Betriebsbereichs; und
   - Beenden (635, 735) der Überhöhung des Drehmoments.

**Claims**

1. Drive system (100) for a work machine, wherein the drive system (100) comprises the following:

   - an electrical main drive (104);
   - a switching device (114) for the connection of the main drive (104) to a main electrical system (112);
   - an electrical auxiliary drive (106, 108);
   - a frequency converter for controlling a torque of the auxiliary drive (106, 108);
   - an output shaft (240) for connection to the work machine (102);
   - a planetary transmission (205) with an internal gear (210), a sun gear (215), a planet gear (220) and a planet gear carrier (225), wherein the internal gear (210) is coupled to the main drive (104), the sun gear (215) is coupled to the output shaft (240), and the planet gear carrier (225) is coupled to the auxiliary drive (106, 108);
   - a clutch path with a clutch (245) for coupling the planet gear carrier (225) to, or separating the latter from, the input shaft; and

- a control device which is configured to operate the drive system (100) in a first range (I), in which the clutch (245) is closed and the switching device (114) is open, or in a second range (II), in which the clutch (245) is open and the switching device (114) is closed; **characterized in that**

- the control device is configured to, during a transition between the first (I) and the second range (II), elevate the torque of the auxiliary drive (106, 108) above the torque that can be permanently provided by the auxiliary drive (106, 108).

2. Drive system (100) according to Claim 1, wherein one or more auxiliary drives (106, 108) are provided, and the auxiliary drives (106, 108) are dimensioned such that, in a range proceeding from a nominal rotational speed of the main drive (104), the sum of the torques that can be permanently provided by the auxiliary drives (106, 108) is lower than a torque demand of the work machine (102).

3. Drive system (100) according to Claim 1 or 2, wherein the auxiliary drive (106, 108) comprises an electrical asynchronous motor.

4. Drive system (100) according to any of the preceding claims, furthermore comprising a temperature sensor (285) on the auxiliary drive (106, 108), wherein the control device is configured to elevate the torque of the auxiliary drive (106, 108) only if the detected temperature lies below a predetermined threshold value.

5. Drive system (100) according to any of the preceding claims, furthermore comprising a temperature sensor (285) on the frequency converter, wherein the control device is configured to elevate the torque of the associated auxiliary drive (106, 108) only if the detected temperature lies below a predetermined threshold value.

6. Drive system (100) according to any of the preceding claims, wherein the frequency converter is dimensioned such that a current that can be permanently provided by it is not sufficient to elevate the torque of the associated auxiliary drive (106, 108).

7. Drive system (100) according to any of Claims 1 to 5, wherein the frequency converter (116, 118, 122) is dimensioned such that a current that can be permanently provided by it is sufficient to operate the associated auxiliary drive (106, 108) in overload.

8. Drive system (100) according to any of the preceding claims, wherein multiple auxiliary drives (106, 108) are provided and the control device is configured to elevate the torques provided by the auxiliary drives (106, 108) in a temporally staggered manner.

9. Method for controlling a drive system (100) which comprises the following:

- an electrical main drive (104);
- a switching device (114) for the connection of the main drive (104) to a main electrical system;
- an electrical auxiliary drive (106, 108);
- a frequency converter for controlling a torque of the auxiliary drive (106, 108);
- an output shaft (240) for connection to the work machine (102) ;
- a planetary transmission (205) with an internal gear (210), a sun gear (215), a planet gear (220) and a planet gear carrier (225), wherein the internal gear (210) is coupled to the main drive (104), the sun gear (215) is coupled to the output shaft (240), and the planet gear carrier (225) is coupled to the auxiliary drive (106, 108) ;
- a clutch path with a clutch (245) for coupling the planet gear carrier (225) to, or separating the latter from, the input shaft;

wherein the method comprises the following steps:

- operating (605, 705) the drive system (100) in a first range (I), in which the clutch (245) is closed and the switching device (114) is open, or in a second range (II), in which the clutch (245) is open and the switching device (114) is closed;
- controlling (620, 715) the frequency converter such that the torque of the auxiliary drive (106, 108) is elevated above the torque that can be permanently provided by the auxiliary drive (106, 108);
- changing (615, 625, 720, 725) the operating range; and
- ending (635, 735) the elevation of the torque.

**Revendications**

1. Système d'entraînement (100) destiné à une machine de travail, le système d'entraînement (100) comprenant :

   - un entraînement électrique principal (104) ;
   - un dispositif de commutation (114) destiné à relier l'entraînement principal (104) à un réseau électrique principal (112) ;
   - un entraînement électrique auxiliaire (106, 108) ;
   - un convertisseur de fréquence destiné à commander un couple de l'entraînement auxiliaire (106, 108) ;
   - un arbre de sortie (240) destiné à être relié à la machine de travail (102) ;
   - un engrenage planétaire (205) comprenant une couronne (210), une roue solaire (215), un satellite (220) et un porte-satellite (225), la couronne (210) étant accouplée à l'entraînement principal (104), la roue solaire (215) étant accouplée à l'arbre de sortie (240) et le porte-satellite (225) étant accouplé à l'entraînement auxiliaire (106, 108) ;
   - une voie d'embrayage comprenant un embrayage (245) destiné à accoupler le porte-satellite (225) à l'arbre d'entrée ou à le séparer de celui-ci ; et
   - un dispositif de commande qui est adapté pour faire fonctionner le système d'entraînement (100) dans une première zone (I) dans laquelle l'embrayage (245) est fermé et le dispositif de commutation (114) est ouvert, ou dans une deuxième zone (II) dans laquelle l'embrayage (245) est ouvert et le dispositif de commutation (114) est fermé ;
   **caractérisé en ce que**
   - le dispositif de commande est adapté pour surélever le couple de l'entraînement auxiliaire (106, 108) lors d'une transition entre la première zone (I) et la deuxième zone (II) au-delà du couple qui peut être fourni en permanence par l'entraînement auxiliaire (106, 108).

2. Système d'entraînement (100) selon la revendication 1, un ou plusieurs entraînements auxiliaires (106, 108) étant prévus et les entraînements auxiliaires (106, 108) étant dimensionnés de telle sorte que, dans une plage à partir d'une vitesse nominale de l'entraînement principal (104), la somme des couples fournis en permanence par les entraînements auxiliaires (106, 108) est inférieure à un besoin de couple de la machine de travail (102).

3. Système d'entraînement (100) selon la revendication 1 ou 2, l'entraînement auxiliaire (106, 108) comprenant un moteur électrique asynchrone.

4. Système d'entraînement (100) selon l'une des revendications précédentes, comprenant en outre un capteur de température (285) au niveau de l'entraînement auxiliaire (106, 108), le dispositif de commande étant adapté pour surélever le couple de l'entraînement auxiliaire (106,108) uniquement si la température détectée est inférieure à une valeur seuil prédéterminée.

5. Système d'entraînement (100) selon l'une des revendications précédentes, comprenant en outre un capteur de température (285) au niveau du convertisseur de fréquence, le dispositif de commande étant adapté pour surélever le couple de l'entraînement auxiliaire associé (106, 108) uniquement si la température détectée est inférieure à une valeur seuil prédéterminée.

6. Système d'entraînement (100) selon l'une des revendications précédentes, le convertisseur de fréquence étant dimensionné de telle sorte qu'un courant qui peut être fourni en permanence par celui-ci est insuffisant pour surélever le couple de l'entraînement auxiliaire associé (106, 108).

7. Système d'entraînement (100) selon l'une des revendications 1 à 5, le convertisseur de fréquence (116, 118, 122) étant dimensionné de telle sorte qu'un courant qu'il peut fournir en permanence soit suffisant pour faire fonctionner l'entraînement auxiliaire associé (106, 108) en surcharge.

8. Système d'entraînement (100) selon l'une des revendications précédentes, une pluralité d'entraînements auxiliaires (106, 108) étant prévus et le dispositif de commande étant adapté pour surélever les couples fournis par les entraînements auxiliaires (106, 108) de manière graduée.

9. Procédé de commande d'un système d'entraînement (100) comprenant :

   - un entraînement électrique principal (104) ;

- un dispositif de commutation (114) destiné à relier l'entraînement principal (104) à un réseau électrique principal ;
- un entraînement électrique auxiliaire (106, 108) ;
- un convertisseur de fréquence destiné à commander un couple de l'entraînement auxiliaire (106, 108) ;
- un arbre de sortie (240) destiné à être relié à la machine de travail (102) ;
- un engrenage planétaire (205) comprenant une couronne (210), une roue solaire (215), un satellite (220) et un porte-satellite (225), la couronne (210) étant accouplée à l'entraînement principal (104), la roue solaire (215) étant accouplée à l'arbre de sortie (240) et le porte-satellite (225) étant accouplé à l'entraînement auxiliaire (106, 108) ;
- une voie d'embrayage comprenant un embrayage (245) destiné à accoupler le porte-satellite (225) à l'arbre d'entrée ou à le séparer de celui-ci ;

le procédé comprenant les étapes suivantes :

- faire fonctionner (605, 705) le système d'entraînement (100) dans une première zone (I) dans laquelle l'embrayage (245) est fermé et le dispositif de commutation (114) est ouvert, ou dans une deuxième zone (II) dans laquelle l'embrayage (245) est ouvert et le dispositif de commutation (114) est fermé ;
- commander (620, 715) le convertisseur de fréquence de telle sorte que le couple de l'entraînement auxiliaire (106, 108) soit surélevé au-delà du couple qui peut être fourni en permanence par l'entraînement auxiliaire (106, 108) ;
- changer (615, 625, 720, 725) la plage de fonctionnement ; et
- mettre fin (635, 735) à la surélévation du couple.

**Fig. 1**

**Fig. 2**

110

255

260

A
⊗

260

260

260

265

270

225

240

235

270

265

**Fig. 3**

**Fig. 4**

**Fig. 5**

600

605

610

615

620

625

630

635

640

Fig. 6

700

```
┌─────────────────┐
│      705        │
└─────────────────┘
         │
         ▼
┌─────────────────┐
│      710        │
└─────────────────┘
         │
         ▼
┌─────────────────┐
│      715        │
└─────────────────┘
         │
         ▼
┌─────────────────┐
│      720        │
└─────────────────┘
         │
         ▼
┌─────────────────┐
│      725        │
└─────────────────┘
         │
         ▼
┌─────────────────┐
│      730        │
└─────────────────┘
         │
         ▼
┌─────────────────┐
│      735        │
└─────────────────┘
         │
         ▼
┌─────────────────┐
│      740        │
└─────────────────┘
```

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014210870 A1